# DEMANDE DE BREVET EUROPEEN

(11) **EP 1 555 424 A1**
(43) Date de publication de la demande: **20.07.2005**
(21) Numéro de dépôt: 05290021.4
(22) Date de dépôt: 05.01.2005
(51) Int. Cl.: F02M 37/22

(54) **Système de purge automatique d'eau pour filtre à carburant**

(30) Priorité: 14.01.2004 FR 0400316
(71) Demandeur: Filtrauto, 78286 Guyancourt Cedex (FR)
(72) Inventeur: Oursin, Dominique Jacques Roger, 92350 Le Plessis Robinson (FR)
(74) Mandataire: Garel, Régis

(57) **Abrégé**

Système de purge automatique d'eau pour filtre à carburant alimentant un moteur de véhicule, le système comprenant:
- un filtre à carburant (1) comprenant une zone de collecte d'eau (2) destinée à recueillir l'eau (3) séparé du carburant (4)
- un dispositif de détection (6) pour détecter la présence d'eau (3) dans la zone de collecte d'eau (2) du filtre,
- une pompe électrique (7) comprenant une entrée (71) raccordée à la sortie d'eau (5), et une sortie d'évacuation (72), et
- une unité de commande (8) adaptée pour déclencher l'une à la suite de l'autre, une première temporisation de décantation lorsque le moteur du véhicule passe de l'état de marche à l'état d'arrêt, une deuxième temporisation au cours de laquelle ladite unité de commande (8) est apte à commander l'activation de la pompe électrique (7) dans le cas où le dispositif détection (6) émet un signal indiquant la présence d'eau dans la zone de collecte d'eau (2) du filtre.

## Description

La présente invention se rapporte aux systèmes de purge automatique d'eau pour filtres à carburant destinés à alimenter un moteur de véhicule.

Plus particulièrement, l'invention concerne parmi ces systèmes de purge automatique d'eau, ceux qui comprennent :
- un filtre à carburant comprenant un élément filtrant interposé de manière étanche entre une entrée de carburant destinée à être reliée à un réservoir de carburant et une sortie de carburant, le filtre comprenant, en outre, une zone de collecte d'eau destinée à recueillir l'eau séparé du carburant et une sortie d'eau raccordée à ladite zone de collecte,
- un dispositif de détection pour détecter la présence d'eau dans la zone de collecte d'eau du filtre,
- une pompe électrique comprenant une entrée raccordée à la sortie d'eau du filtre, et une sortie d'évacuation, et
- une unité de commande destinée à être connectée au circuit électrique du véhicule, ladite unité de commande étant destinée à commander l'activation ou non de la pompe électrique en fonction des signaux reçus du dispositif de détection.

Dans les modes de réalisation connus de ces systèmes de purge automatique d'eau, l'unité de commande est généralement adaptée pour déclencher ou commander l'activation de la pompe électrique lorsque, d'une part, le dispositif de détection émet un signal indiquant la présence d'eau dans la zone de collecte d'eau du filtre, et d'autre part, lorsque des moyens de commutation par exemple commandés par une clé de contact du véhicule sont placés dans une position d'activation correspondant au démarrage du moteur du véhicule. Ainsi, lorsque l'utilisateur du véhicule amène la clé de contact en position du démarrage du moteur, et si le dispositif de détection détecte de l'eau dans le filtre à carburant, l'unité de commande traite cette information et déclenche la commande de purge jusqu'à vidange complète de l'eau contenue dans le filtre vers un réservoir déporté. Dans ce cas, un relais connecté à l'unité de commande empêche le démarrage du véhicule pendant la purge d'eau complète du filtre à carburant.

Néanmoins, avec ce type de systèmes de purge d'eau automatique au démarrage du moteur et lorsque la température extérieure est négative, l'eau contenue dans la zone de collecte d'eau du filtre peut être gelée après une immobilisation plus ou moins longue du véhicule. La pompe électrique est alors dans l'incapacité d'évacuer l'eau gelée contenue dans le filtre bien que le niveau de seuil atteint par l'eau dans le filtre soit critique.

La présente invention a notamment pour but de palier cet inconvénient.

A cet effet, selon l'invention, un système de purge automatique d'eau du genre en question est caractérisé en ce que l'unité de commande est adaptée pour déclencher l'une à la suite de l'autre:
- une première temporisation de décantation lorsque le moteur du véhicule passe de l'état de marche à l'état d'arrêt, cette première temporisation de décantation étant destinée à permettre une séparation convenable de l'eau et du carburant dans la zone de collecte d'eau du filtre, et
- une deuxième temporisation au cours de laquelle ladite unité de commande est apte à commander l'activation de la pompe électrique dans le cas où le dispositif détection émet un signal indiquant la présence d'eau dans la zone de collecte d'eau du filtre.

Grâce à ces dispositions, la purge automatique de l'eau s'effectue après le fonctionnement du moteur, c'est-à-dire lorsque la haute température sous le capot du moteur a permis le dégel de l'eau, ce qui permet ainsi à la pompe électrique de vidanger l'eau contenue dans ledit filtre même par température extérieure négative.

Dans des modes de réalisation préférés de l'invention, on peut éventuellement avoir recours en outre à l'une et/ou à l'autre des dispositions suivantes :
- le dispositif de détection est adapté pour détecter la présence d'eau dans la zone de collecte d'eau lorsque l'eau a atteint un volume déterminé, et la deuxième temporisation est paramétrée pour que la pompe électrique purge au plus la moitié dudit volume déterminé ;
- le système comporte un premier clapet anti-retour qui comprend une entrée raccordée à la sortie d'évacuation de la pompe électrique, et une sortie destinée à être raccordée à un réservoir d'eau ;
- le réservoir d'eau comprend une partie supérieure pourvue d'une sortie raccordée, au moyen d'une conduite d'évacuation de carburant, à un circuit de retour de carburant qui débouche dans un réservoir de carburant, ladite conduite d'évacuation de carburant étant équipée d'un deuxième clapet anti-retour pour permettre uniquement l'évacuation de carburant contenu dans le réservoir d'eau vers le circuit de retour de carburant ;
- le dispositif de détection comprend un détecteur par différence de résistivité ;
- le filtre à carburant comprend:
   - une tête comprenant l'entrée et la sortie de gazole,
   - une cartouche fixée à la tête de façon amovible, et qui comporte un boîtier étanche délimitant un espace intérieur creux dans lequel est logé l'élément filtrant qui sépare ledit espace intérieur creux en un espace d'aval et un espace d'amont comprenant la zone de collecte d'eau ;
- la pompe électrique et le dispositif de détection sont rapportés sur le boîtier du filtre ;
- le boîtier comprend, d'une part, une paroi latérale reliée de façon étanche à la tête au moyen d'un dispositif de fixation, et d'autre part, un fond qui ferme le boîtier à l'opposé de la tête, le fond présentant un conduit sensiblement vertical dans lequel est fixé de façon étanche le dispositif de détection d'eau ;
- le premier clapet anti-retour est rapporté de manière fixe sur le boîtier du filtre ;
- l'unité de commande est rapportée de manière fixe sur le boîtier du filtre.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique du système de purge automatique d'eau selon l'invention, relié à un réservoir d'eau intégré dans le véhicule,
- la figure 2 est une vue en perspective d'un filtre du système de purge automatique d'eau,
- la figure 3 est une vue de dessous du filtre représenté sur la figure 2,
- la figure 4 est une vue en coupe verticale du filtre selon la ligne IV-IV de la figure 3,
- la figure 5 est une vue en coupe verticale du filtre selon la ligne V-V de la figure 3, et
- la figure 6 est une vue en coupe verticale du filtre selon la ligne VI-VI de la figure 3.

Sur les différentes figures, les mêmes références désignent des éléments identiques ou similaires.

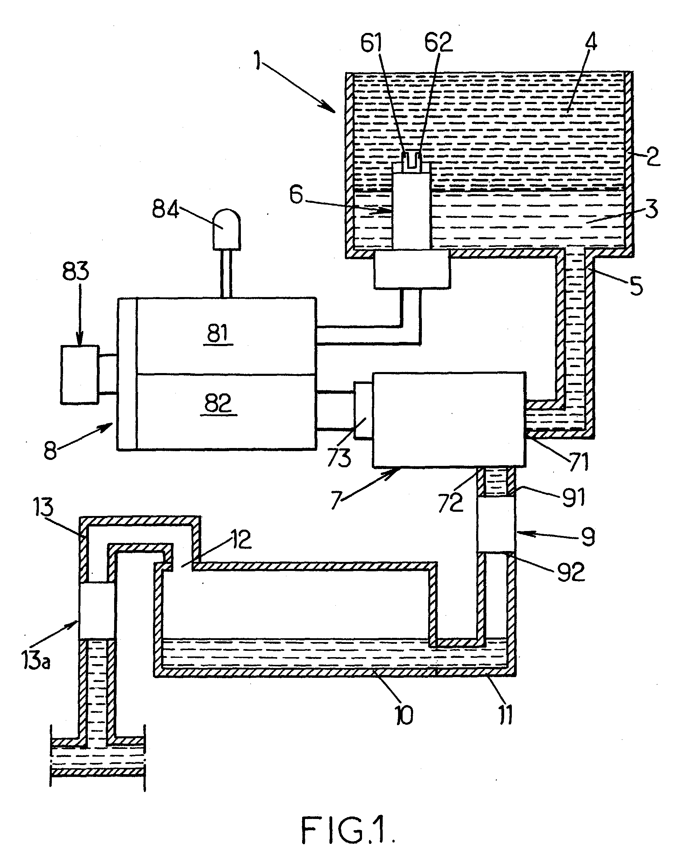

La figure 1 représente un système de purge automatique d'eau pour un filtre à gazole 1 qui sera décrit plus en détail dans la suite de la description, ce filtre à gazole étant destiné à alimenter un moteur diesel de véhicule.

Plus particulièrement, ce système de purge automatique d'eau comprend :
- un filtre à gazole 1 dans lequel est destiné à être placé un élément filtrant et qui comprend en partie inférieure une zone de collecte 2 destinée à recueillir l'eau 3 séparée du gazole 4, ainsi qu'une sortie d'eau 5 raccordée à la zone de collecte d'eau 2,
- un dispositif de détection 6 qui est destiné à détecter la présence d'eau 3 dans la zone de collecte 2 du filtre 1,
- une pompe électrique 7 qui comprend une entrée 71 raccordée à la sortie d'eau 5 du filtre 1, et une sortie d'évacuation 72, et
- une unité de commande 8 qui est destinée à être connectée au circuit électrique du véhicule, cette unité de commande 8 étant par ailleurs reliée électriquement au dispositif de détection 6 ainsi qu'à la pompe électrique 7 qui comprend à cet effet un connecteur électrique 74.

Comme on peut le voir sur cette figure 1, la sortie d'évacuation 72 de la pompe électrique 7 est reliée à l'entrée 91 d'un clapet anti-retour 9 qui comprend également une sortie 92 reliée à un réservoir d'eau 10 au moyen d'une conduite d'évacuation 11.

Par ailleurs, l'unité de commande 8 du système de purge automatique comprend un circuit de commande 81 relié électriquement au dispositif de détection 6, ainsi qu'un circuit de puissance 82 qui est quant à lui relié électriquement à la pompe électrique 7. Le circuit de commande 81 ainsi que le circuit de puissance 82 de l'unité de commande 8 sont reliés par exemple à la batterie du véhicule (non représentée) au moyen d'un connecteur électrique 83.

Le circuit de commande peut également être relié à un voyant lumineux 84 placé par exemple dans le tableau de bord du véhicule et destiné à s'allumer lorsque le circuit de commande 81 reçoit un signal de détection d'eau du dispositif de détection 6.

Le dispositif de détection 6 est adapté pour délivrer un signal électrique au circuit de commande 81 de l'unité de commande 8, lorsqu'une quantité d'eau suffisante s'est accumulée dans la zone de collecte d'eau, et qui correspond à un niveau de seuil maximum.

A cet effet, le dispositif de détection 6 peut par exemple comprendre deux électrodes 61 et 62 qui peuvent être directement noyées dans un matériau isolant sur la majeure partie de leur longueur, hormis au niveau de leur extrémité supérieure. Le niveau auquel sont placées les extrémités supérieures des électrodes 61,62 correspond au niveau de seuil d'alerte prédéterminé à partir duquel le volume d'eau 2 recueilli dans la zone de collecte 2 doit être purgé.

Ainsi, tant que les deux électrodes 61 et 62 ou plus précisément leurs extrémités supérieures sont entièrement immergées dans le gazole 4, elles sont sensiblement isolées électriquement l'une de l'autre compte tenu du caractère isolant du gazole, mais dès que le niveau d'eau dans la zone de collecte 2 atteint le seuil d'alerte et donc les extrémités supérieures des deux électrodes 61 et 62, la résistance électrique entre les deux électrodes chute brutalement, ce qui est détecté par le circuit de commande 81 de l'unité de commande 8.

Cette unité de commande 8 est adaptée, conformément à l'invention, pour déclencher la purge automatique d'eau du filtre 1 après l'arrêt du moteur du véhicule et non avant sa mise en route, et si le détecteur 6 émet un signal indiquant la présence d'eau, comme décrit ci-dessus.

Plus particulièrement, l'unité de commande 8 est adaptée pour déclencher tout d'abord une première temporisation de décantation T1 lorsque le moteur du véhicule passe de l'état de marche à l'état d'arrêt, cette première temporisation de décantation qui est paramétrable étant destinée à permettre une séparation convenable de l'eau 3 et du gazole 4 contenu dans la zone de collecte 2 du filtre 1.

Cette temporisation de décantation qui peut être par exemple de l'ordre de quelques minutes, et qui est déclenchée dès l'arrêt du moteur permet uniquement la séparation convenable de l'eau 3 contenue dans 1a zone de collecte 2 dans le cas de la présence d'une émulsion eau gazole après utilisation du véhicule.

Pendant cette première temporisation de décantation, l'unité de commande 8 ou plus précisément le circuit de commande 81 peut recevoir des signaux du dispositif de détection 6 indiquant la présence d'eau dans la zone de collecte 2, mais dans ce cas ledit circuit de commande 81 ne pourra aucunement déclencher l'activation de la pompe électrique 7.

Lorsque cette première temporisation de décantation est finie, le circuit de commande 81 déclenche automatiquement une seconde temporisation T2 au cours de laquelle l'unité de commande est apte à commander l'activation de la pompe électrique 7 au moyen du circuit de puissance 82 dans le cas où le dispositif de détection 6 émet un signal indiquant que l'eau contenue dans la zone de collecte 2 du filtre 1 a atteint le seuil d'alerte prédéterminé. Dans ce cas, la pompe électrique 7 est activée pendant toute la seconde temporisation T2. Cette seconde temporisation T2 sera déterminée pour qu'au maximum la moitié du volume d'eau 3 contenue dans la zone de collecte 2 soit aspirée et évacuée par la pompe électrique 7 afin d'être amenée vers le réservoir d'eau 10 du véhicule.

Cette seconde temporisation T2 définie pour qu'au maximum la moitié de la zone de collecte d'eau 2 soit vidée, garantie de ne purger que de l'eau en évitant ainsi que la pompe électrique 7 n'aspire également du gazole 4.

Néanmoins, le réservoir d'eau 10 peut également être adapté pour palier une éventuelle aspiration de gazole 4 par la pompe électrique 7.

A cet effet, la réserve d'eau 10 comprend en partie supérieure une sortie 12 raccordée, au moyen d'une conduite d'évacuation 13, au circuit de retour de carburant 14 destinée à renvoyer l'excédent de gazole n'ayant pas été consommé dans le moteur du véhicule en direction du réservoir à gazole. La conduite d'évacuation de gazole 13 peut également être pourvue d'un clapet anti-retour 13a afin d'éviter toute introduction accidentelle de gazole depuis le circuit de retour 14 vers le réservoir d'eau 10. Ainsi, dans le cas où du gazole 4 serait contenu dans le réservoir d'eau 10, celui-ci retournera au réservoir de carburant via la conduite d'évacuation 13 lorsque le réservoir d'eau 10 sera plein, le gazole étant alors en suspension au-dessus du volume d'eau.

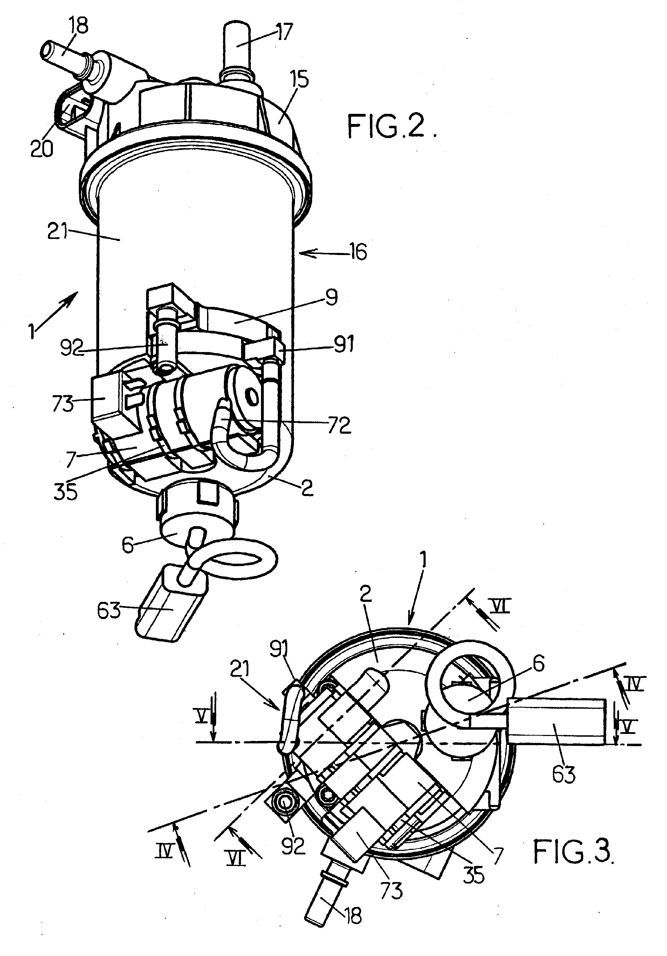

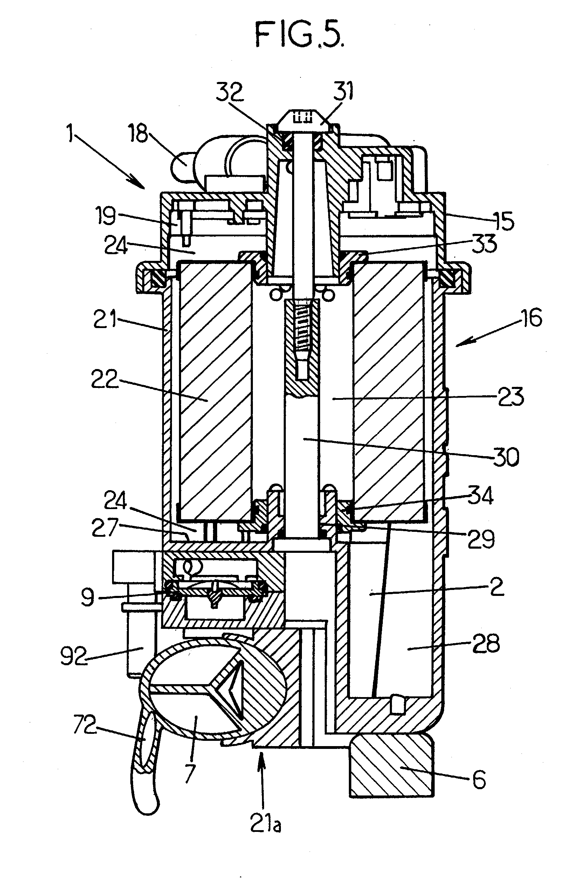

Nous allons maintenant décrire plus en détail le filtre à gazole du système de purge automatique en regard des figures 2 à 6.

Le filtre 1 comporte une tête 15 et une cartouche 16 fixées de façon amovible l'une par rapport à l'autre.

La tête 15 comprend une entrée de gazole 17 et une sortie de gazole 18 qui sont raccordées au circuit d'alimentation du gazole du véhicule (non représenté).

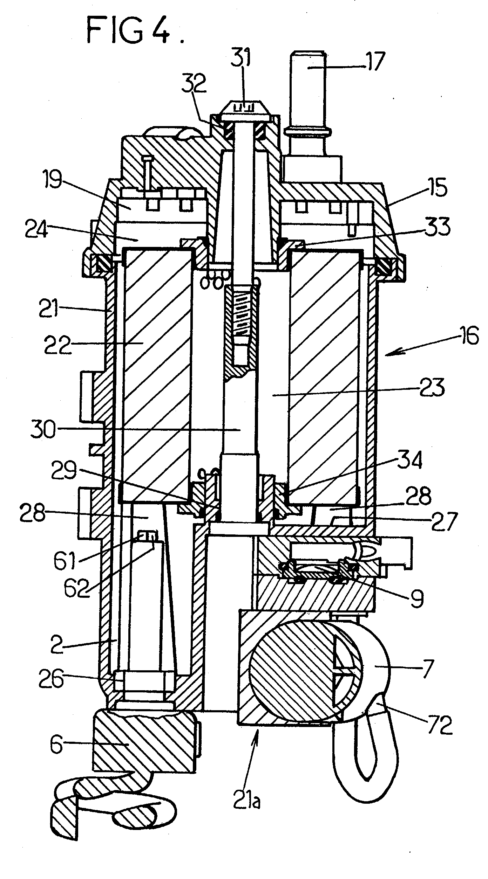

Par ailleurs, la tête 15 du filtre 1 peut également comporter un dispositif de réchauffage de gazole 19 (figure 4) qui comprend par exemple un ou plusieurs éléments résistifs CTP alimentés électriquement par l'intermédiaire d'un connecteur 20.

La cartouche 16, quant à elle, comporte un boîtier 21 étanche qui délimite un espace intérieur creux dans lequel est logé un élément filtrant 22. Cet élément filtrant 22 sépare l'espace intérieur creux en un espace d'aval 23 qui communique avec la sortie de gazole 18 et en un espace d'amont 24 qui communique avec l'entrée de gazole 17 et qui comprend également dans sa partie inférieure la zone de collecte d'eau 2.

Comme on peut le voir sur l'ensemble des figures 2 à 6, la portion inférieure du boîtier 21 qui forme la zone de collecte d'eau 2 présente une section transversale sensiblement semi cylindrique en délimitant ainsi au niveau la paroi externe du boîtier 21 un renforcement 21a également de forme sensiblement semi cylindrique dans lequel est rapporté de manière fixe la pompe électrique 7, le clapet anti-retour 9.

Par ailleurs, comme on peut le voir sur la figure 4, la zone de collecte d'eau 2 comporte un conduit vertical 26 ouvert vers le bas, dans lequel est fixé avec étanchéité, par exemple par vissage, le détecteur 6. Ce détecteur 6 est également doté d'un connecteur électrique externe 63 destiné à être relié à l'unité de commande 8. Le fond de cette zone de collecte 2, ainsi que le fond 27 du boîtier 21 disposé au-dessus du renfoncement 21a comprend une pluralité de nervures d'appui vertical 28 sur lesquelles vient s'appuyer axialement l'élément filtrant 22 contenu dans l'espace intérieur dudit boîtier 21. Le boîtier 21 comprend également au niveau de sa jonction entre la zone de collecte d'eau 2 et le fond 27 situé au-dessus du renfoncement 21a, une ouverture 29 dans laquelle est logée de manière étanche une broche 30 qui s'étend verticalement vers le haut jusqu'à une extrémité taraudée dans laquelle est vissée une vis 31 logée de manière étanche dans une ouverture 32 réalisée sur la tête 15 du filtre 1 de manière à fixer la tête 15 sur le boîtier 21.

Le filtre 1 comprend également des joints d'étanchéité 33 et 34 qui relient de façon étanche l'entrée de gazole 17 à l'espace amont 24 et la sortie de gazole 18 à l'espace d'aval 24.

Dans le mode de réalisation considéré ici, et comme on peut le voir sur la figure 2, le boîtier 21 du filtre 1 ou plus particulièrement le renfoncement 21a situé dans sa partie inférieure, est adaptée pour recevoir la pompe électrique 7 ainsi que le clapet anti-retour 9.

Plus précisément, la pompe électrique 7 est directement fixée par exemple au moyen d'anneaux de serrage 35 sur la paroi externe du boîtier 21 et la sortie d'eau 72 de la pompe électrique est directement raccordée à l'entrée 91 du clapet anti-retour 9. Par ailleurs, ce clapet anti-retour 9 comprend également une sortie d'eau 92 destinée à être raccordée au conduit d'évacuation 11 (voir figure 1) permettant l'évacuation de l'eau purgée vers le réservoir d'eau 10.

Dans ce mode de réalisation, la pompe électrique 7 comprend également un connecteur électrique 73 destiné à être connectée électriquement au circuit de commande 82 de l'unité de commande 8.

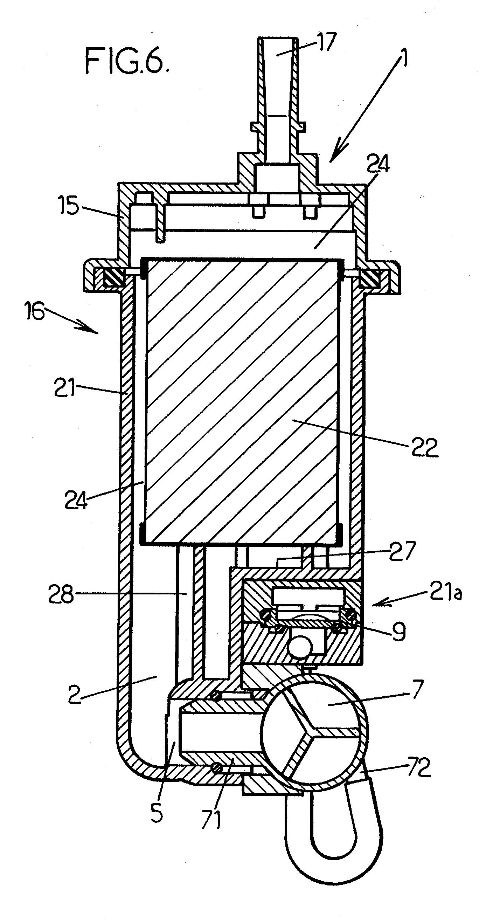

Comme on peut le voir également sur la figure 6, la sortie d'eau 5 située dans le fond de la zone de collecte 2 se présente sous la forme d'un conduit sensiblement horizontal dans lequel est logée de manière fixe et étanche l'entrée 71 de la pompe électrique 7.

Bien entendu, on peut également prévoir, sans sortir du cadre de l'invention, de rapporter de manière fixe l'unité de commande 8 sur la paroi extérieure du boîtier 21, et, dans ce cas le connecteur électrique 73 de la pompe électrique 7, ainsi que le connecteur électrique 63 du détecteur 6 seront directement connectés à l'unité de commande 8 rapportée sur le boîtier 21 du filtre en formant ainsi un système pré-assemblé de purge automatique d'eau destiné à être raccordé par la suite au circuit électrique du véhicule ainsi qu'à son réservoir d'eau.

## Revendications

1. Système de purge automatique d'eau pour filtre à carburant alimentant un moteur de véhicule, le système comprenant:
- un filtre à carburant (1) comprenant un élément filtrant (22) interposé de manière étanche entre une entrée de carburant (17) destinée à être reliée à un réservoir de carburant et une sortie de carburant (18), le filtre (1) comprenant, en outre, une zone de collecte d'eau (2) destinée à recueillir l'eau (3) séparé du carburant (4) et une sortie d'eau (5) raccordée à ladite zone de collecte (2),
- un dispositif de détection (6) pour détecter la présence d'eau (3) dans la zone de collecte d'eau (2) du filtre,
- une pompe électrique (7) comprenant une entrée (71) raccordée à la sortie d'eau (5) du filtre, et une sortie d'évacuation (72), et
- une unité de commande (8) destinée à être connectée au circuit électrique du véhicule, ladite unité de commande (8) étant destinée à commander l'activation ou non de la pompe électrique (7) en fonction des signaux reçus du dispositif de détection (6),
**caractérisé en ce que** l'unité de commande (8) est adaptée pour déclencher l'une à la suite de l'autre:
- une première temporisation de décantation lorsque le moteur du véhicule passe de l'état de marche à l'état d'arrêt, cette première temporisation de décantation étant destinée à permettre une séparation convenable de l'eau (3) et du carburant (4) dans la zone de collecte d'eau (2) du filtre, et
- une deuxième temporisation au cours de laquelle ladite unité de commande (8) est apte à commander l'activation de la pompe électrique (7) dans le cas où le dispositif détection (6) émet un signal indiquant la présence d'eau dans la zone de collecte d'eau (2) du filtre.

2. Système selon la revendication 1, dans lequel le dispositif de détection (6) est adapté pour détecter la présence d'eau (3) dans la zone de collecte d'eau (2) lorsque l'eau a atteint un volume déterminé, et la deuxième temporisation est paramétrée pour que la pompe électrique (7) purge au plus la moitié dudit volume déterminé.

3. Système selon l'une ou l'autre des revendications 1 et 2, comportant un premier clapet anti-retour (9) qui comprend une entrée (91) raccordée à la sortie d'évacuation (72) de la pompe électrique(7), et une sortie (92) destinée à être raccordée à un réservoir d'eau (10).

4. Système selon la revendication 4, dans lequel le réservoir d'eau (10) comprend une partie supérieure pourvue d'une sortie (12) raccordée, au moyen d'une conduite d'évacuation de carburant(13), à un circuit de retour de carburant (14) qui débouche dans un réservoir de carburant, ladite conduite d'évacuation de carburant(14) étant équipée d'un deuxième clapet anti-retour (13a) pour permettre uniquement l'évacuation de carburant contenu dans le réservoir d'eau (10) vers le circuit de retour de carburant (14).

5. Système selon l'une quelconque des revendications précédentes, dans lequel le dispositif de détection (6) comprend un détecteur par différence de résistivité.

6. Système selon l'une quelconque des revendications précédentes, dans lequel le filtre à carburant (1) comprend:
- une tête (15) comprenant l'entrée (17) et la sortie (18) de gazole,
- une cartouche (16) fixée à la tête(15) de façon amovible, et qui comporte un boîtier (21) étanche délimitant un espace intérieur creux dans lequel est logé l'élément filtrant (22) qui sépare ledit espace intérieur creux en un espace d'aval (23) et un espace d'amont (24) comprenant la zone de collecte d'eau(2),

7. Système selon la revendication 6, dans lequel la pompe électrique (7) et le dispositif de détection (6) sont rapportés sur le boîtier (21) du filtre (1).

8. Système selon la revendication 7, dans lequel le boîtier (21) comprend, d'une part, une paroi latérale reliée de façon étanche à la tête (15) au moyen d'un dispositif de fixation (30, 31), et d'autre part, un fond (26) qui ferme le boîtier à l'opposé de la tête (15), le fond présentant un conduit (26) sensiblement vertical dans lequel est fixé de façon étanche le dispositif de détection d'eau (6).

9. Système selon les revendications 3 et 6, dans lequel le premier clapet anti-retour (9) est rapporté de manière fixe sur le boîtier (21) du filtre.

10. Système selon la revendication 6, dans lequel l'unité de commande (8) est rapportée de manière fixe sur le boîtier (21) du filtre.
